# EUROPÄISCHE PATENTSCHRIFT

(11) **EP 2 080 671 B1**
(45) Veröffentlichungstag und Bekanntmachung des Hinweises auf die Patenterteilung: **21.11.2012**
(21) Anmeldenummer: 08000712.3
(22) Anmeldetag: 16.01.2008
(51) Int. Cl.: B60R 9/06, B60R 9/10

(54) **Lastenträger**
Load carrier
Porte-charge

(43) Veröffentlichungstag der Anmeldung: 22.07.2009
(73) Patentinhaber: WESTFALIA - Automotive GmbH, 33378 Rheda-Wiedenbrück (DE)
(72) Erfinder: Hermbusch, Gerhard, 33449 Langenberg (DE); von Hörsten, Ralf, 30900 Wedemark (DE)
(74) Vertreter: Bregenzer, Michael

(56) Entgegenhaltungen:
- DE-A1- 10 342 177
- DE-A1- 10 352 644
- DE-A1-102004 021 709
- US-A1- 2005 116 002

## Beschreibung

Die Erfindung betrifft einen Lastenträger zum Aufladen einer Last, der an einem Heckbereich eines Kraftfahrzeugs, insbesondere eines Personenkraftwagens, befestigbar und im montierten Zustand nach hinten vor den Heckbereich des Kraftfahrzeugs nach hinten vorsteht, gemäß dem Oberbegriff des Anspruchs 1.

US 2005/0116002 A1 betrifft einen derartigen Lastenträger, der an einer Anhängekupplung befestigbar ist.

In DE 10 2004 021 709 A1 ist ein Lastenträger beschrieben, der einen Schubladenauszug mit Trageinrichtungen für aufzustellende Fahrräder umfasst, die gegenüber dem Schubladenauszug ausschwenkbar sind. Eine Schubladenabdeckung ist durch Teil des Stoßfängers oder der Stoßfängerverkleidung gebildet. Der Stoßfänger hat einen Ausschnitt, in den ein am Schubladenauszug angeordnetes Mittelteil passt.

DE 103 52 644 A1 betrifft einen Heckträger für Kraftfahrzeuge, der im Bereich eines hinteren Stoßfängerabschnittes aus einem Heck des Kraftfahrzeuges ausziehbar ist. An der Schublade ist ein Stoßfängerabschnitt angeordnet, der in den übrigen Stoßfänger passt.

Aus DE 103 42 177 A1 geht ein Heckträger hervor, der vom Fahrzeugheck wegschwenkbar ist.

Ein weiterer Lastenträger ist in der deutschen Patentanmeldung DE 10 2007 023 495 beschrieben, der schwenkbare Trägerrinnen hat, die als Erweiterungsbauteile für einen Basisträger ausschwenkbar sind. Auf die ausgeschwenkten Trägerrinnen kann beispielsweise ein Fahrrad aufgestellt werden. Wenn die Trägerrinnen nach innen, in Richtung des Basisträgers geschwenkt sind, braucht dieser wesentlich weniger Bauraum und kann beispielsweise in einen Stauraum am Fahrzeugheck des Fahrzeuges eingeschoben werden.

Der Stauraum wird geometrisch an das Bauvolumen des Lastenträgers angepasst, so dass dieser in dem Stauraum Platz findet.

Der bekannte Lastenträger baut zwar kompakt, so dass der Stauraum nicht übermäßig groß sein. Allerdings ist die Anpassung der Karosseriestruktur des Kraftfahrzeuges aufwändig, so dass derartige Lösungen selten zum Einsatz kommen.

Es ist daher die Aufgabe der vorliegenden Erfindung, einen vom Kraftfahrzeug entfernbaren Lastenträger bereitzustellen, der platzsparend in einem Stauraum des Kraftfahrzeuges unterbringbar ist.

Zur Lösung der Aufgabe ist ein Lastenträger gemäß der technischen Lehre des Anspruchs 1 vorgesehen.

Das erfindungsgemäße Konzept sieht vor, dass nicht der Stauraum an den Lastenträger, sondern umgekehrt der Lastenträger an den Stauraum angepasst ist. Die Konturen des Lastenträgers sind erfindungsgemäß so beschaffen, dass der Lastenträger auch bei beengten Platzverhältnissen im Kraftfahrzeug unterbringbar ist. So steht dort beispielsweise häufig lediglich eine Reserveradmulde, ein Seitenfach eines Gepäckabteils, ein Stauraum unterhalb eines Sitzes oder dergleichen zur Verfügung. Es reicht in der Regel nicht aus, einen Lastenträger lediglich zusammenzufalten oder Komponenten zu entfernen, um den Lastenträger in derartig beengten Stauräumen unterzubringen. Hier setzt die Erfindung an und stellt ein optimal an die Platzverhältnisse des Kraftfahrzeugs adaptiertes Trägerkonzept bereit.

Der Lastenträger ist von dem Kraftfahrzeug lösbar, um in dem Stauraum, z.B. im Gepäckraum, desselben untergebracht zu werden. Beispielsweise hat der Lastenträger eine Befestigungseinrichtung zur Befestigung an einem Kupplungsarm einer Anhängekupplung des Kraftfahrzeuges.

Es können erfindungsgemäß einzelne Abschnitte oder auch insgesamt der Träger so ausgestaltet sein, dass er an den Stauraum angepasst ist. So ist vorgesehen, dass im Wesentlichen die gesamte Außenkontur des Lastenträgers in der Staustellung an dem fahrzeugseitigen Stauraum angepasst ist. Aber auch nur Teile der Außenkontur, beispielsweise Außenkonturbestandteile der Erweiterungsbauteile, des Basisträgers und dergleichen, können an die stauraumseitigen Innenkonturen angepasst sein.

Der Stauraum für den Lastenträger ist vorzugsweise eine Reserveradmulde, ein Seitenfach eines Gepäckabteils, oder ein Stauraum unterhalb eines Sitzes. Der Stauraum für den Lastenträger ist vorteilhaft abseits eines zum Verstauen von Gepäckteilen an sich vorgesehenen Hauptstauraums. So steht das Hauptstauvolumen z.B. eines Gepäckabteils nach wie vor zur Verfügung, während der Lastenträger in einem ansonsten in der Regel ungenutzten Neben-Stauraum verstaubar ist.

Vorzugsweise ist die in der Staustellung außenliegende Außenkontur der mindestens einen Komponente zumindest abschnittsweise gerundet oder rund. Die runde Bauweise eignet sich vorzugsweise dazu, den Lastenträger in einer Reserveradmulde unterzubringen. Zur Unterbringung in der Reserveradmulde ist es vorteilhaft, wenn im Wesentlichen die gesamte Außenkontur des Lastenträgers rund oder gerundet ist. Beispielsweise kann die projizierte Fläche des Lastenträgers abgerundet oder komplett rund sein. Der Lastenträger kann aber auch dreidimensional gerundet sein, was bei Reserveradmulden vorteilhaft ist.

Vorteilhaft ist es, wenn der Lastenträger den Stauraum möglichst optimal ausnutzt.

Das mindestens eine Erweiterungsbauteil umfasst beispielsweise ein Tragegestellteil zum Vergrößern eines Ladebereichs des Basisträgers. Beispielsweise handelt es sich bei dem Tragegestellteil um eine Trägerrinne zur Aufnahme eines Rads eines Zweirads, insbesondere eines Fahrrads. Der Lastenträger hat vorzugsweise ein Trägerrinnenpaar mit in Arbeitsstellung im Wesentlichen zueinander fluchtenden Trägerrinnen, die in der Staustellung aufeinander zu liegen kommen. Dies macht den Lastenträger in der Staustellung besonders platzsparend.

Die mindestens eine an den Stauraum angepasste Komponente umfasst beispielsweise das mindestens eine Erweiterungsbauteil. Aber auch der Basisträger an sich ist vorzugsweise an den Stauraum angepasst und bildet eine an den Stauraum angepasste Komponente.

Ferner ist es möglich, dass die mindestens eine an den Stauraum angepasste Komponente eine Tragegestell zum Auflegen der Last umfasst. Das Tragegestell ist feststehend oder zweckmäßigerweise an dem Basisträger beweglich gelagert. Am Heckbereich des Kraftfahrzeugs befestigten Zustand kann das Tragegestell mit aufgelegter Last von dem Heckbereich des Kraftfahrzeugs wegbewegt werden, beispielsweise weggeschwenkt oder weggeschoben werden, so dass der Bediener einen leichteren Zugang zu einem Gepäckabteil des Kraftfahrzeuges hat. Ferner kann bei wegbewegtem Tragegestell beispielsweise eine Heckklappe des Kraftfahrzeuges ausgeschwenkt werden, während dies bei zum Kraftfahrzeug hin bewegtem Tragegestell nicht möglich wäre.

Der Basisträger hat zweckmäßigerweise an seiner in der Arbeitsstellung dem Kraftfahrzeug gegenüberliegenden Seite und/oder an seiner in der Arbeitsstellung von dem Kraftfahrzeug abgewandten Seite eine an den Stauraum angepasste Außenkontur. Beispielsweise umfasst der Basisträger einen Trägerrahmen oder ein Gestell, bei dem ein Rahmenbauteil bzw. Gestellbauteil eine runde oder polygonale Kontur aufweist.

Die mindestens eine an den Stauraum angepasste Komponente kann aber auch eine Leuchte oder einen Kennzeichenträger umfassen. Ferner ist es denkbar, dass die Komponente eine Halterung, z.B. einen Trägerbügel, für eine an dem Lastenträger befestigbare Last umfasst. An dem Trägerbügel können beispielsweise Fahrräder befestigt werden.

An dem Lastenträger ist zweckmäßigerweise ein Lager zur schwenkbeweglichen oder schiebebeweglichen Lagerung des mindestens einen Erweiterungsbauteiles vorgesehen.

Schließlich betrifft die Erfindung auch ein Kraftfahrzeug, das den Lastenträger gemäß der Erfindung aufweist.

Nachfolgend wird ein Ausführungsbeispiel anhand der Zeichnung erläutert. Es zeigen:
- Figur 1: eine perspektivische Ansicht eines Ausführungsbeispiels eines erfindungsgemäßen Lastenträgers in Staustellung, und
- Figur 2: den Lastenträger gemäß Figur 1 in Arbeitsstellung, in der Erweiterungsbauteile von einem Basisträger abstehen.

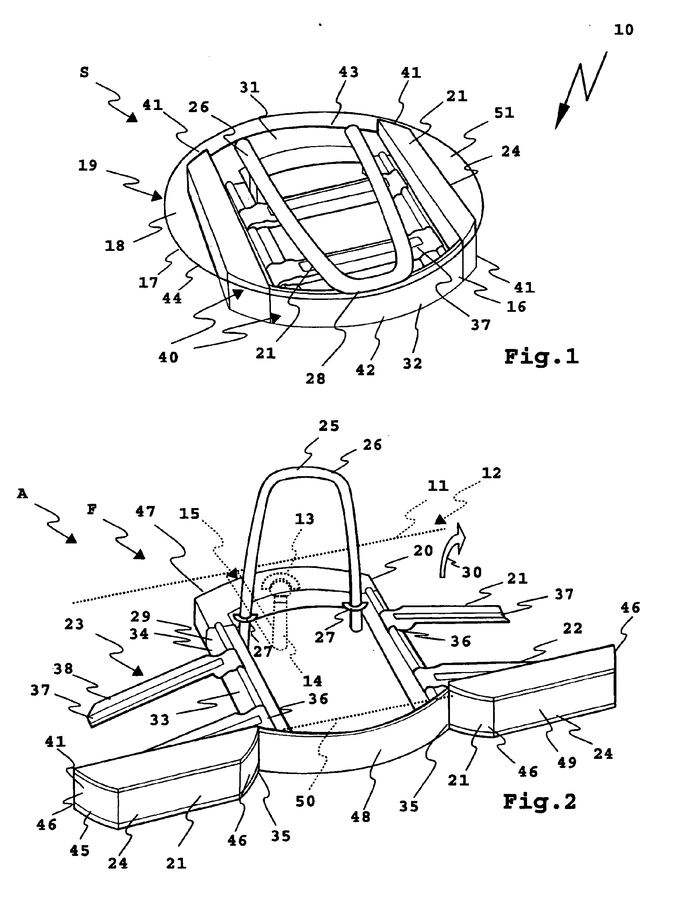

Ein Lastenträger 10 zum Aufladen einer Last, beispielsweise von nicht dargestellten Fahrrädern, ist an einem Heckbereich 11 eines Kraftfahrzeuges 12 befestigbar. Der Lastenträger 10 hat eine schematisch dargestellte Befestigungseinrichtung 13 zur Befestigung an einem Kupplungsarm 14 einer Anhängekupplung 15 des Kraftfahrzeugs 12. Wenn der Lastenträger 10 an der Anhängekupplung 15 befestigt ist, steht er nach hinten vor den Heckbereich 11 vor, so dass auf dem Lastenträger 10 eine Last abgelegt werden kann. Der Lastenträger stellt in seiner in Figur 2 dargestellten Arbeitsstellung A eine verhältnismäßig große Auflagefläche zum Ablegen der Last zur Verfügung. In einer Staustellung S hingegen (Figur 1) baut der Lastenträger 10 ausgesprochen kompakt und benötigt aus der Zeichnung ohne weiteres ersichtlich eine kleinere Fläche.

Nicht nur die Flächenausdehnung des Lastenträgers 10 ist optimal zum Verstauen im Kraftfahrzeug 12 ausgelegt, sondern auch eine Außenkontur 16 des Lastenträgers, wenn er in seiner Staustellung S ist. Die Außenkontur 16 ist nämlich im Wesentlichen rund, so dass er in eine Reserveradmulde 17, die einen fahrzeugseitigen Stauraum 18 bildet, bequem untergebracht werden kann. Die Reserveradmulde 17 ist in einem Gepäckabteil 19 des Kraftfahrzeuges 12 vorgesehen und in der Zeichnung schematisch angedeutet.

Der Lastenträger 10 umfasst einen Basisträger 20, an dem mehrere Erweiterungsbauteile 21 vorliegend schwenkbeweglich angeordnet sind. Die Erweiterungsbauteile 21 können zu dem Basisträger 20 hin geschwenkt werden, so dass der Lastenträger 10 in seiner Staustellung das in Figur 1 dargestellte geringe Stauvolumen benötigt.

Die Erweiterungsbauteile 21 umfassen schwenkbewegliche Tragegestellteile 22 zum Vergrößern eines Ladebereichs 23 des Basisträgers 20, Leuchten 24 und einen eine Halterung 25 bildenden Trägerbügel 26 zur Befestigung der nicht dargestellten Last. Die Erweiterungsbauteile 21 können in oder an den Basisträger 20 heranbewegt werden, so dass dessen Stauvolumen in der Staustellung S verkleinert ist.

So kann beispielsweise der Trägerbügel 26 für die Staustellung S aus Steckaufnahmen 27 herausgenommen und in einen Innenraum 28 des Basisträgers 20 gelegt werden. Die Leuchten 24 sind schwenkbeweglich an einem Tragegestellteil 29 angeordnet, das seinerseits schwenkbeweglich an dem Basisträger 20 gelagert ist. Das Tragegestell 29 kann in Richtung eines Pfeiles 30 von dem Basisträger 20 weggeschwenkt werden, so dass es beispielsweise den Schwenkbereich eines nicht dargestellten Heckklappe des Kraftfahrzeuges 12 freigibt.

Der Basisträger 20 und das Tragegestell 29 sind jeweils U-förmig, wobei die beiden U-Teile gegensinnig zueinander angeordnet sind. Ein Grundschenkel 31 des Basisträgers 20 liegt einem Grundschenkel 32 des Tragegestells 29 gegenüber. Seitenschenkel 33 des Tragegestells 29 liegen auf Seitenschenkeln 34 des Basisträgers 20 auf, wenn das Tragegestell 29 zum Basisträger 20 hin geschwenkt ist, was einer Fahrstellung F des Lastenträgers 10 entspricht, die in Figur 2 dargestellt ist.

Die Leuchten 24 sind an einander entgegengesetzten Seitenendbereichen des Grundschenkels 32 mittels Schwenklagern 35 schwenkbeweglich gelagert. Für die Staustellung S können die beiden Leuchten 24 an die Seitenschenkel 33 herangeklappt werden, siehe Figur 1.

Die Tragegestellteil 22 umfassen Trägerrinnen 37, die am Tragegestell 29 schwenkbeweglich gelagert sind. Dazu sind Schwenklager 36 an den Seitenschenkeln 33 vorgesehen. Die Trägerrinnen 37 sind paarweise angeordnet und bilden Trägerrinnenpaare 38, wobei in der Arbeitsstellung jeweils zwei Trägerrinnen 37 zueinander fluchtend seitlich von dem Tragegestell 29 abstehen. Vorzugsweise stehen die Trägerrinnen 37 nach schräg unten ab, was für einen sicheren Halt eines Fahrrades sorgt. Wenn die Trägerrinnen 37 nach innen geklappt sind (Figur 1), liegen sie im Wesentlichen flächig aufeinander und bilden auch so eine Tragstruktur zum Auflegen einer Last.

Nicht nur der Lastenträger 10 als Ganzes, sondern auch eine Vielzahl seiner Komponenten 40 haben Außenkonturen 41, 42, 43, die an die runde Innenkontur 44 des Stauraums 18 angepasst sind. Beispielsweise haben die Leuchtengehäuse 45 der Leuchten 24 Seitenwände 46 mit einer runden Außenkontur 41, korrelierend mit der runden Innenkontur 44. In der Staustellung S gehen die runden Seitenwände 46 nahezu nahtlos in die zweckmäßigerweise mit gleichem Radius gerundeten Seitenflächen 47 und 48 der beiden Grundschenkel 31 und 32 über, so dass insgesamt eine durchgehende Rundung zwischen den Seitenwänden 46 der nach innen geklappten Leuchten 24 und den Seitenflächen 47, 48 in der Staustellung S erzielt ist.

Prinzipiell möglich wäre es auch, dass Frontflächen 49 der Leuchtengehäuse 45 zur Anpassung an die runde Innenkontur 45 ebenfalls rund oder zumindest gerundet sind. Dies ist vorliegend aber zur Anpassung an die runde Innenkontur 44 nicht notwendig. Der Lastenträger 10 kann auch in der vorliegenden Form in der Reserveradmulde 17 untergebracht werden.

Ferner ist es optional, dass die hintere Seitenfläche 48 gerundet ist. Dort könnte an Stelle der Rundung auch eine gerade Trägefläche 50 vorgesehen sein, die zur Anbringung eines Kennzeichens besser geeignet ist. Es ist allerdings auch denkbar, dass an die runde Seitenfläche 48 ein separater Kennzeichenträger (nicht dargestellt) angesteckt wird, der eine gerade, ebene Anbringungsfläche für ein Kennzeichen des Kraftfahrzeuges 12 bereitstellt.

Noch einmal sei betont, dass die vorliegende Ausführungsform nur eine Möglichkeit darstellt, einen erfindungsgemäßen Lastenträger an einen fahrzeugseitigen Stauraum anzupassen. Wenn der Stauraum nicht rund ist, sondern beispielsweise Ausbuchtungen, polygonale Innenkonturen oder dergleichen aufweist, sieht der erfindungsgemäße Ansatz vor, dass der Lastenträger diesen Stauraum optimal ausnutzt und Außenkonturen aufweist, die in Staustellung außen liegen und das Stauvolumen jeweils füllen.

Ferner umfasst es die Erfindung auch, wenn der Stauraum nicht vollständig ausgeführt ist, sondern noch Freiräume bleiben. So sind beispielsweise neben den in den Stauraum 18 eingelegten Lastenträger 10 Freiräume 51 vorhanden. In einen der Freiräume 51 könnte man beispielsweise den Kupplungsarm 14 legen, wenn dieser vom Kraftfahrzeug 12 abgenommen ist.

## Patentansprüche

1. Lastenträger zum Aufladen einer Last, der an einem Heckbereich (11) eines Kraftfahrzeugs (12), insbesondere eines Personenkraftwagens, befestigbar und im montierten Zustand nach hinten vor den Heckbereich (11) des Kraftfahrzeugs (12) nach hinten vorsteht, und der zwischen einer Arbeitsstellung (A) und einer Staustellung (S) verstellbar ist, wobei in der Arbeitsstellung (A) mindestens ein an einem Basisträger (20) beweglich angeordnetes oder an dem Basisträger (20) befestigbares Erweiterungsbauteil (21) von dem Basisträger (20) absteht und wobei das mindestens eine Erweiterungsbauteil (21) in der Staustellung (S) zu dem Basisträger (20) hinbewegt ist, so dass der Lastenträger eine gegenüber der Arbeitsstellung (A) kleinere Fläche beansprucht, wobei der Lastenträger (10) zur platzsparenden Unterbringung in einem Stauraum (18) des Kraftfahrzeugs mindestens eine an den Stauraum (18) angepasste Komponente (40) umfasst, die eine in der Staustellung (S) außen liegende, mit einer Innenkontur (44) des fahrzeugseitigen Stauraums (18) korrelierende Außenkontur (16; 41-43) aufweist, wobei der Lastenträger (10) von dem Kraftfahrzeug (12) lösbar ist, **dadurch gekennzeichnet, dass** im wesentlichen die gesamte Außenkontur (16) des Lastenträgers (10) in der Staustellung (S) an den fahrzeugseitigen Stauraum (18) angepasst und die gesamte Außenkontur (16) des Lastenträgers (10) in der Staustellung (S) im wesentlichen rund ist.

2. Lastenträger nach Anspruch 1, **dadurch gekennzeichnet, dass** die in der Staustellung (S) außen liegende Außenkontur (16; 41-43) der mindestens einen Komponente (40) zumindest abschnittsweise gerundet oder rund ist.

3. Lastenträger nach Anspruch 1 oder 2, **dadurch gekennzeichnet, dass** mindestens eine Erweiterungsbauteil (21) ein Tragegestellteil (22) zum Vergrößern eines Ladebereichs (23) des Basisträgers (20) umfasst.

4. Lastenträger nach Anspruch 3, **dadurch gekennzeichnet, dass** das Tragegestellteil (22) eine Trägerrinne (37) zur Aufnahme eines Rads eines Zweirads umfasst.

5. Lastenträger nach Anspruch 4, **dadurch gekennzeichnet, dass** er mindestens ein Trägerrinnenpaar (38) mit in der Arbeitsstellung (A) im wesentlichen zueinander fluchtenden Trägerrinnen (37) aufweist, die in der Staustellung (S) aufeinander liegen.

6. Lastenträger nach einem der vorhergehenden Ansprüche, **dadurch gekennzeichnet, dass** die mindestens eine an den Stauraum (18) angepasste Komponente (40) das mindestens eine Erweiterungsbauteil (21) umfasst.

7. Lastenträger nach einem der vorhergehenden Ansprüche, **dadurch gekennzeichnet, dass** die mindestens eine an den Stauraum (18) angepasste Komponente (40) den Basisträger (20) umfasst.

8. Lastenträger nach einem der vorhergehenden Ansprüche, **dadurch gekennzeichnet, dass** die mindestens eine an den Stauraum (18) angepasste Komponente (40) ein Tragegestell (29) zum Auflegen der Last umfasst, das an dem Basisträger (20) beweglich gelagert ist und im am Heckbereich (11) des Kraftfahrzeugs (12) befestigten Zustand mit aufgelegter Last von dem Heckbereich (11) zum leichteren Zugang zu einem Gepäckabteil (19) des Kraftfahrzeugs (12) weg beweglich ist.

9. Lastenträger nach einem der vorhergehenden Ansprüche, **dadurch gekennzeichnet, dass** der Basisträger (20) und/oder das Tragegestell (29) an seiner in der Arbeitsstellung (A) dem Kraftfahrzeug (12) gegenüberliegenden Seite (47) und/oder an seiner in der Arbeitsstellung (A) von dem Kraftfahrzeug (12) abgewandten Seite (48) eine an den Stauraum (18) angepasste Außenkontur (16; 41-43) aufweist.

10. Lastenträger nach einem der vorhergehenden Ansprüche, **dadurch gekennzeichnet, dass** die mindestens eine an den Stauraum (18) angepasste Komponente (40) eine Leuchte (24) umfasst.

11. Lastenträger nach einem der vorhergehenden Ansprüche, **dadurch gekennzeichnet, dass** die mindestens eine an den Stauraum (18) angepasste Komponente (40) einen Kennzeichenträger umfasst.

12. Lastenträger nach einem der vorhergehenden Ansprüche, **dadurch gekennzeichnet, dass** die mindestens eine an den Stauraum (18) angepasste Komponente (40) eine Halterung (25), insbesondere einen Trägerbügel (26), für eine an dem Lastenträger (10) befestigbare Last umfasst.

13. Lastenträger nach einem der vorhergehenden Ansprüche, **dadurch gekennzeichnet, dass** er eine Befestigungseinrichtung (13) zur Befestigung an einem Kupplungsarm (14) einer Anhängekupplung (15) des Kraftfahrzeugs (12) oder einer Aufnahmehalterung des Kraftfahrzeugs (12), insbesondere einer Steckaufnahme oder einer Abschleppöse oder einer Abschleppösenhalterung, aufweist.

14. Lastenträger nach einem der vorhergehenden Ansprüche, **dadurch gekennzeichnet, dass** der Stauraum (18) eine Reserveradmulde (17) des Kraftfahrzeugs (12) oder ein Seitenfach in einem Gepäckabteil (19) des Kraftfahrzeugs (12) umfasst oder unter einem insbesondere klappbaren Sitz des Kraftfahrzeugs (12) vorgesehen ist.

15. Lastenträger nach einem der vorhergehenden Ansprüche, **dadurch gekennzeichnet, dass** an dem Basisträger (20) ein Lager (35, 36) zur schwenkbeweglichen und/oder schiebebeweglichen Lagerung des mindestens einen Erweiterungsbauteils (21) und/oder einer Steckaufnahme (27) zum Halten des mindestens einen Erweiterungsbauteils (21) angeordnet ist.

16. Kraftfahrzeug (12), insbesondere eines Personenkraftwagen, mit einem Lastenträger (10) nach einem der vorhergehenden Ansprüche.

## Claims

1. Load carrier for loading up a load, which may be fastened to a rear section (11) of a motor vehicle (12), in particular a car, and in the fitted state projects beyond the rear section (11) of the motor vehicle (12) towards the rear, and is adjustable between an operating position (A) and a stored position (S), wherein in the operating position (A) at least one extension member (21) mounted movably on a base carrier (20) or able to be attached to the base carrier (20) protrudes from the base carrier (20) and wherein the extension member or members (21) in the stored position (S) is or are moved back to the base carrier (20), so that the load carrier requires less space as compared with the operating position (A), wherein the load carrier (10) includes, for space-saving accommodation in a storage space (18) of the motor vehicle, at least one component (40) adapted to the storage space (18) and which has an external contour (16; 41-43) on the outside in the stored position (S) and corresponding to an internal contour (44) of the vehicle-side storage space (18), wherein the load carrier (10) may be detached from the motor vehicle (12), **characterised in that** substantially the whole external contour (16) of the load carrier (10) in the stored position (S) matches the vehicle-side storage space (18) and the whole external contour (16) of the load carrier (10) in the stored position (S) is substantially round.

2. Load carrier according to claim 1, **characterised in that** the external contour (16; 41-43) of the one or more components (40) lying outside in the stored position (S) is rounded or round at least in sections.

3. Load carrier according to claim 1 or 2, **characterised in that** at least one extension member (21) comprises a support frame section (22) for increasing one loading area (23) of the base carrier (20).

4. Load carrier according to claim 3, **characterised in that** the support frame section (22) includes a support channel (37) for holding a wheel of a bicycle.

5. Load carrier according to claim 4, **characterised in that** it has at least one support channel pair (38) with support channels (37) substantially flush with one another in the operating position (A) and lying one above the other in the stored position (S).

6. Load carrier according to any of the preceding claims, **characterised in that** the component or components (40) matched to the storage space (18) comprises/comprise the extension member or members (21).

7. Load carrier according to any of the preceding claims, **characterised in that** the component or components (40) matched to the storage space (18) comprises/comprise the base carrier (20).

8. Load carrier according to any of the preceding claims, **characterised in that** the component or components (40) matched to the storage space (18) comprises/comprise a support frame (29) for placing of the load and which is mounted movably on the base carrier (20) and may, in the loaded state fastened to the rear section (11) of the motor vehicle (12), be moved away from the rear section (11) to allow easier access to a luggage section (19) of the motor vehicle (12).

9. Load carrier according to any of the preceding claims, **characterised in that** the base carrier (20) and/or the support frame (29) have, on their side (47) opposite the motor vehicle (12) in the operating position (A) and/or on their side (48) facing away from the motor vehicle (12) in the operating position (A), an external contour (16; 41-43) matching the storage space (18).

10. Load carrier according to any of the preceding claims, **characterised in that** the component or components (40) matched to the storage space (18) comprises/comprise a lamp (24).

11. Load carrier according to any of the preceding claims, **characterised in that** the component or components (40) matched to the storage space (18) comprises/comprise a license plate support.

12. Load carrier according to any of the preceding claims, **characterised in that** the component or components (40) matched to the storage space (18) comprises/comprise a mounting (25), in particular a support bracket (26), for a load to be fastened to the load carrier (10).

13. Load carrier according to any of the preceding claims, **characterised in that** it has a fastening device (13) for fastening to a coupling arm (14) of a trailer coupling (15) of the motor vehicle (12) or a holder mounting of the motor vehicle (12), in particular a bracket holder or a towing lug or a towing lug mounting.

14. Load carrier according to any of the preceding claims, **characterised in that** the storage space (18) includes a spare wheel recess (17) of the motor vehicle (12) or a side compartment in a luggage section (19) of the motor vehicle (12) or is provided under a seat, in particular folding, of the motor vehicle (12).

15. Load carrier according to any of the preceding claims, **characterised in that** there is provided on the base carrier (20) a bearing (35, 36) for pivoting movement and/or sliding movement support of the extension member or members (21) and/or a bracket holder (27) for holding the extension member or members (21).

16. Motor vehicle (12), in particular a car, with a load carrier (10) according to any of the preceding claims.

## Revendications

1. Porte-charge pour le chargement d'une charge qui peut être fixé sur une zone arrière (11) d'un véhicule automobile (12), en particulier d'une voiture, particulière et dépasse à l'état monté vers l'arrière de la zone arrière (11) du véhicule automobile (12) vers l'arrière, et qui peut être déplacé entre une position de travail (A) et une position de retenue (S), sachant que dans la position de travail (A), au moins un composant d'élargissement (21) disposé de manière mobile sur un support de base (20) ou pouvant être fixé sur le support de base (20) dépasse du support de base (20) et sachant que l'au moins un composant d'élargissement (21) est déplacé dans la position de retenue (S) vers le support de base (20) de sorte que le porte-charge sollicite une surface plus petite par rapport à la position de travail (A), sachant que le porte-charge (10) comporte, pour le logement peu encombrant dans un espace de retenue (18) du véhicule automobile, au moins un composant (40) adapté à l'espace de retenue (18) qui présente un contour extérieur (16 ; 41-43) en corrélation avec un contour intérieur (44) de l'espace de retenue (18) côté véhicule, se trouvant à l'extérieur dans la position de retenue (S), sachant que le porte-charge (10) peut être détaché du véhicule automobile (12), **caractérisé en ce que** sensiblement le même contour extérieur (16) du porte-charge (10) est adapté dans la position de retenue (S) à l'espace de retenue (18) côté véhicule et le contour extérieur (16) entier du porte-charge (10) est sensiblement rond dans la position de retenue (S).

2. Porte-charge selon la revendication 1, **caractérisé en ce que** le contour extérieur (16 ; 41-43) se trouvant à l'extérieur dans la position de retenue (S) d'au moins un composant (40) est arrondi ou rond au moins par section.

3. Porte-charge selon la revendication 1 ou 2, **caractérisé en ce qu'**au moins un composant d'élargissement (21) comporte une partie de châssis porteur (22) pour l'agrandissement d'une zone de chargement (23) du support de base (20).

4. Porte-charge selon la revendication 3, **caractérisé en ce que** la partie de châssis porteur (22) comporte une rigole de support (37) pour le logement d'une roue d'un essieu.

5. Porte-charge selon la revendication 4, **caractérisé en ce qu'**il présente au moins une paire de rigoles de support (38), dont les rigoles de support (37) s'alignant sensiblement l'une sur l'autre dans la position de travail (A) se situent l'une sur l'autre dans la position de retenue (S).

6. Porte-charge selon l'une quelconque des revendications précédentes, **caractérisé en ce que** l'au moins un composant (40) adapté à l'espace de retenue (18) comporte l'au moins un composant d'élargissement (21).

7. Porte-charge selon l'une quelconque des revendications précédentes, **caractérisé en ce que** l'au moins un composant (40) adapté à l'espace de retenue (18) comporte le support de base (20).

8. Porte-charge selon l'une quelconque des revendications précédentes, **caractérisé en ce que** l'au moins un composant (40) adapté à l'espace de retenue (18) comporte un châssis porteur (29) pour poser la charge qui est logé de manière mobile sur le support de base (20) et s'éloigne, dans l'état fixé à la zone arrière (11) du véhicule automobile (12) avec la charge posée, de la zone arrière (11) pour accéder plus facilement à un compartiment à bagages (19) du véhicule automobile (12).

9. Porte-charge selon l'une quelconque des revendications précédentes, **caractérisé en ce que** le support de base (20) et/ou le châssis porteur (29) présente un contour extérieur (16 ; 41-43) adapté à l'espace de retenue (18) sur son côté (47) opposé dans la position de travail (A) au véhicule automobile (12) et/ou sur son côté éloigné dans la position de travail (A) du véhicule automobile (12).

10. Porte-charge selon l'une quelconque des revendications précédentes, **caractérisé en ce que** l'au moins un composant (40) adapté à l'espace de retenue (18) comporte un feu (24).

11. Porte-charge selon l'une quelconque des revendications précédentes, **caractérisé en ce que** l'au moins un composant (40) adapté à l'espace de retenue (18) comporte un support de plaque minéralogique.

12. Porte-charge selon l'une quelconque des revendications précédentes, **caractérisé en ce que** l'au moins un composant (40) adapté à l'espace de retenue (18) comporte un support (25), en particulier un étrier de support (26) pour une charge pouvant être fixée sur le porte-charge (10).

13. Porte-charge selon l'une quelconque des revendications précédentes, **caractérisé en ce qu'**il présente un dispositif de fixation (13) pour la fixation à un bras (14) d'un attelage (15) du véhicule automobile (12) ou à un support de réception du véhicule automobile (12), en particulier un logement à emboîtement ou un oeillet de remorquage ou un support d'oeillet de remorquage.

14. Porte-charge selon l'une quelconque des revendications précédentes, **caractérisé en ce que** l'espace de retenue (18) comporte une cavité pour une roue de secours (17) du véhicule automobile (12) ou un compartiment latéral dans un compartiment à bagages (19) du véhicule automobile (12) ou est prévu sous un siège en particulier rabattable du véhicule automobile (12).

15. Porte-charge selon l'une quelconque des revendications précédentes, **caractérisé en ce qu'**un palier (35, 36) pour le logement mobile en pivotement et/ou en coulissement d'au moins un composant d'élargissement (21) et/ou d'un logement à emboîtement (27) pour le maintien d'au moins un composant d'élargissement (21) est prévu sur le support de base (20).

16. Véhicule automobile (12), en particulier voiture particulière avec un porte-charge (10) selon l'une quelconque des revendications précédentes.
